# FASCICULE DE BREVET EUROPEEN

(11) **EP 3 424 786 B1**
(45) Date de publication et mention de la délivrance du brevet: **11.03.2020**
(21) Numéro de dépôt: 18180661.3
(22) Date de dépôt: 29.06.2018
(51) Int. Cl.: B60S 1/20, B60S 1/34

(54) **SYSTÈME D'ESSUYAGE POUR VÉHICULE AUTOMOBILE**
WISCHERSYSTEM FÜR KRAFTFAHRZEUG
WIPING SYSTEM FOR MOTOR VEHICLE

(30) Priorité: 06.07.2017 FR 1756391
(43) Date de publication de la demande: 09.01.2019
(73) Titulaire: Valeo Systèmes d'Essuyage, 78322 Le Mesnil Saint Denis (FR)
(72) Inventeur: GORCE, Stéphane, 32 050 SKAWINA (PL)
(74) Mandataire: Valeo Systèmes d'Essuyage

(56) Documents cités:
- EP-A1- 3 037 307
- FR-A1- 2 827 241
- FR-A1- 2 832 968
- US-A- 6 092 259

## Description

La présente invention concerne le domaine de l'essuyage du vitrage des véhicules automobiles et plus particulièrement un système d'essuyage linéaire, c'est-à-dire dans lequel le balai se déplace sur la vitre à essuyer selon une translation linéaire.

Un système d'essuyage comprend de manière générale au moins un balai, éventuellement fixé à un bras, mu en déplacement par pivotement par un moteur de manière à être déplacé de manière alternative entre une première position extrémale et une deuxième position extrémale pour balayer, et donc essuyer au moins une partie de la vitre du véhicule automobile.

Actuellement, dans le but de réduire les consommations énergétiques des véhicules automobiles, de nombreux travaux portent sur l'amélioration de l'aérodynamisme des véhicules automobiles afin d'améliorer leur coefficient de pénétration dans l'air. Une piste d'amélioration consiste en la modification de la courbure du pare-brise avant du véhicule automobile, et notamment en augmentant son rayon de courbure. Pour de tels pare-brises, les systèmes d'essuyage traditionnels par pivotement ne permettent pas d'assurer un bon essuyage de telles vitres. Ainsi, des systèmes d'essuyage linéaires ont été développés.

On connaît de l'art antérieur un système d'essuyage linéaire présentant un rail disposé au niveau supérieur d'une vitre permettant le déplacement à l'intérieur de celui-ci d'un élément mobile supportant un bras d'essuyage sur lequel est fixé un balai d'essuie-glace.

Cependant, le balai d'essuie-glace présente une extrémité libre. Cette extrémité libre peut, notamment à haute vitesse, ne pas suivre l'extrémité reliée au bras et la qualité de l'essuyage peut ne pas être garantie. Par ailleurs, la présence de l'extrémité libre peut fragiliser le balai qui peut se plier, voire se rompre, en cas de fort vent latéral. De plus, dans une telle disposition, l'élément mobile peut être endommagé et notamment déformé à cause des degrés de liberté laissés à l'extrémité libre. Par ailleurs, un tel balai d'essuie-glace peut ne pas présenter une flexibilité suffisante à cause de la rigidité imposée par le bras d'essuyage, empêchant ainsi au balai d'essuie-glace d'épouser la courbure de la vitre à essuyer.

Par ailleurs, on connaît de l'art antérieur des systèmes d'essuyage linéaires présentant un balai d'essuie-glace dont chaque extrémité est reliée à un côté de la vitre à essuyer. Ce système d'essuyage présente un moteur disposé d'un côté de la vitre à essuyer afin d'entraîner un élément mobile permettant le déplacement du balai d'essuie-glace sur la vitre à essuyer.

Cependant, les côtés de la vitre à essuyer peuvent ne pas présenter les mêmes longueurs et la distance de course entre les première et deuxième positions d'essuyage des extrémités des balais peut être différente. Ainsi, l'essuyage de la vitre peut ne pas être suffisant avec un tel système d'essuyage, et des zones situées en fin de course des extrémités des balais peuvent ne pas être essuyées correctement, ce qui peut nuire à la visibilité et donc à la sécurité de la conduite.

Le document US 6 092 259 A1 montre un système d'essuyage pour véhicule automobile selon le préambule de la première revendication.

Un objectif de la présente invention est de pallier au moins partiellement aux défauts des arts antérieurs énoncés ci-dessus.

Un autre objectif de la présente invention, différent de l'objectif précédent, est de proposer un système d'essuyage linéaire permettant un bon essuyage de l'ensemble de la vitre à essuyer.

Un autre objectif de la présente invention est de proposer un système d'essuyage permettant un bon essuyage de la vitre à essuyer quelque soit la courbure de cette vitre.

Pour atteindre au moins un des objectifs précités, la présente invention a pour objet un système d'essuyage, notamment pour véhicule automobile, comprenant au moins un balai configuré pour se déplacer selon une translation linéaire sur une vitre et selon une direction parallèle à deux côtés opposés de cette vitre, ledit au moins un balai présentant une première extrémité et une deuxième extrémité, caractérisé en ce que le système d'essuyage comprend en outre au moins un premier rail et un deuxième rail disposés au niveau des côtés de la vitre, lesdits au moins premier rail et deuxième rail présentant respectivement une courbure destinée à épouser la forme de la vitre et étant destinés à loger une première coulisse et une deuxième coulisse reliées respectivement à la première et à la deuxième extrémités du balai, et en ce que le système d'essuyage comprend en outre au moins un premier moteur et un deuxième moteur d'entraînement disposés respectivement au niveau du premier rail et du deuxième rail pour entraîner respectivement via un premier mécanisme et un deuxième mécanisme de couplage associé la première coulisse et la deuxième coulisse, lesdits au moins premier moteur et deuxième moteur d'entraînement étant pilotés par une unité de contrôle configurée pour permettre le déplacement synchronisé de la première coulisse et de la deuxième coulisse.

La présence du premier rail et deuxième rail permet de plaquer le balai contre la vitre à essuyer. Par ailleurs, la forme de ces rails épouse la forme de la vitre à essuyer ce qui permet au balai d'être en permanence en contact avec la vitre et garantit un bon essuyage des différentes zones de celle-ci quelque soit la courbure de cette vitre. De plus, la mise en œuvre du premier moteur et du deuxième moteur d'entraînement permet d'assurer une bonne translation linéaire du balai sur la vitre grâce au déplacement synchrone de la première coulisse et de la deuxième coulisse à l'intérieur des rails, ce qui permet d'essuyer les zones disposées en fin de course du balai.

Le système d'essuyage selon la présente invention peut comprendre une ou plusieurs des caractéristiques suivantes prises seules ou en combinaison.

La première extrémité du balai présente un ressort destiné à assurer la liaison entre la première extrémité du balai et la première coulisse disposée dans l'au moins un premier rail.

La deuxième extrémité du balai présente une forme spécifique d'attache, notamment sphérique ou parallélépipédique, destinée à coopérer avec la deuxième coulisse disposée dans l'au moins un deuxième rail.

Selon une variante, la deuxième extrémité du balai peut présenter un ressort destiné à assurer la liaison entre la deuxième extrémité du balai et la deuxième coulisse disposée dans l'au moins un deuxième rail.

La première coulisse et la deuxième coulisse présentent une première extrémité logée dans le rail et une deuxième extrémité présentant une pince destinée à permettre la coopération de ladite coulisse avec la première ou la deuxième extrémité du balai.

La première extrémité de la coulisse présente des roues afin de permettre son déplacement à l'intérieur du rail.

Selon un mode de réalisation particulier, la pince de la deuxième coulisse présente une forme complémentaire à la forme spécifique d'attache portée par la deuxième extrémité du balai.

Selon un aspect, le premier rail et le deuxième rail présentent une surface intérieure réalisée en un matériau présentant un coefficient de frottement inférieur à 0,25.

Le matériau utilisé pour la surface intérieure du premier rail et du deuxième rail est choisi parmi du cuivre, de l'étain, du bronze, du polytétrafluoroéthylène, un polyamide, du graphite, du nylon, un acétal, ou un mélange de ces composés.

Selon un autre aspect, la surface intérieure du premier rail et du deuxième rail est configurée pour permettre un déplacement de la première coulisse et de la deuxième coulisse sur coussin d'air.

Selon une première variante, le premier moteur et le deuxième moteur d'entraînement sont configurés pour déplacer respectivement la première coulisse et la deuxième coulisse à la même vitesse.

Selon une deuxième variante, le premier moteur et le deuxième moteur d'entraînement sont configurés pour déplacer la première coulisse et la deuxième coulisse à des vitesses différentes afin de pallier les différences de longueur des deux côtés opposés de la vitre.

Le premier moteur et le deuxième moteur d'entraînement sont configurés pour déplacer le balai à une vitesse d'au plus 2 m/s sur la surface de la vitre à essuyer.

Selon un aspect, le premier mécanisme et le deuxième mécanisme de couplage associé sont choisis parmi un système à courroie et poulie, un système à câble et poulie, ou encore un système à poulie et crémaillère.

Selon cet aspect, le premier rail et le deuxième rail présentent chacun au moins une ouverture extrémale, lesdites ouvertures extrémales présentant une forme configurée pour limiter l'altération du premier et du deuxième mécanisme de couplage associé, notamment une forme arrondie ou chanfreinée.

Selon un mode de réalisation particulier, le système d'essuyage comporte :
- le premier et le deuxième moteur d'entraînement disposés respectivement au centre du premier rail et deuxième rail,
- un premier balai et un deuxième balai, le premier balai étant disposé d'un premier côté de la vitre et le deuxième balai étant disposé d'un deuxième côté de la vitre, opposé au premier côté par rapport au premier moteur et deuxième moteur d'entraînement,

- le premier mécanisme et le deuxième mécanisme de couplage associé comprenant :
   - une première poulie et une deuxième poulie à quatre canaux, disposée au centre du premier rail et du deuxième rail et mues en rotation respectivement par le premier moteur et le deuxième moteur d'entraînement,
   - deux premières poulies et deux deuxièmes poulies à deux canaux, disposées respectivement aux extrémités du premier et du deuxième rail, et
   - quatre câbles reliant respectivement les premières poulies à deux canaux à la première poulie à quatre canaux et les deuxièmes poulies à deux canaux à la deuxième poulie à quatre canaux, lesdits câbles supportant chacun au moins une coulisse et étant configurés pour permettre le déplacement de cette au moins une coulisse entre la poulie à deux canaux et la poulie à quatre canaux reliées par ledit câble de manière à permettre le déplacement du premier ou du deuxième balai sur la vitre à essuyer.

D'autres caractéristiques et avantages de la présente invention apparaîtront plus clairement à la lecture de la description suivante, donnée à titre illustratif et non limitatif, et des dessins annexés dans lesquels :
- la figure 1 est une représentation schématique en perspective en plongée d'un système d'essuyage,
- la figure 2 est une représentation schématique partielle en perspective d'un rail du système d'essuyage de la figure 1,
- la figure 3A est une représentation schématique en perspective d'une première coulisse destinée à être logée dans le rail de la figure 2,
- la figure 3B est une représentation schématique en perspective d'une deuxième coulisse destinée à être logée dans le rail de la figure 2,
- la figure 4 est une représentation schématique en perspective d'un balai du système d'essuyage de la figure 1,
- la figure 5 est une représentation schématique en perspective d'une poulie à quatre canaux composant un mécanisme de couplage associé du système d'essuyage,
- la figure 6 est une représentation schématique en perspective d'une poulie à deux canaux composant le mécanisme de couplage associé du système d'essuyage,
- la figure 7 est une représentation schématique en perspective de la poulie à deux canaux de la figure 6 disposée au niveau d'une extrémité du rail de la figure 2,
- la figure 8A est une représentation schématique de dessus du système d'essuyage selon un mode de réalisation particulier, et
- la figure 8B est une représentation schématique de face du système d'essuyage selon le mode de réalisation particulier de la figure 8A.

Sur ces figures, les éléments identiques portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description suivante, il est fait référence à une première et à une deuxième extrémités du balai, à une première et à une deuxième extrémités de la vitre, à un premier et à un deuxième moteurs d'entraînement, à un premier et à un deuxième rails, à une première et à une deuxième coulisses, à un premier et à un deuxième mécanismes de couplage associés, à un premier et à un deuxième balais, et à un premier et à un deuxième côtés de la vitre. Il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps par exemple pour apprécier la disposition des différents éléments composant le système d'essuyage, ou encore pour apprécier le fonctionnement du système d'essuyage.

Dans la description suivante, on entend par « forme rectangulaire ou trapézoïdale de la vitre », la forme en deux dimensions de cette vitre, c'est-à-dire sans prendre en considération le rayon de courbure de celle-ci.

Par ailleurs, on entend par « coulisse » dans la description suivante, un objet mobile qui glisse dans un rail.

Dans la description suivante, les différents éléments sont introduits de façon générale dans un premier temps puis peuvent être utilisés de façon spécifique dans un deuxième temps, notamment en précisant leur positionnement. Les termes spécifiques présentent les différentes caractéristiques des éléments introduits de façon générale préalablement à leur utilisation spécifique.

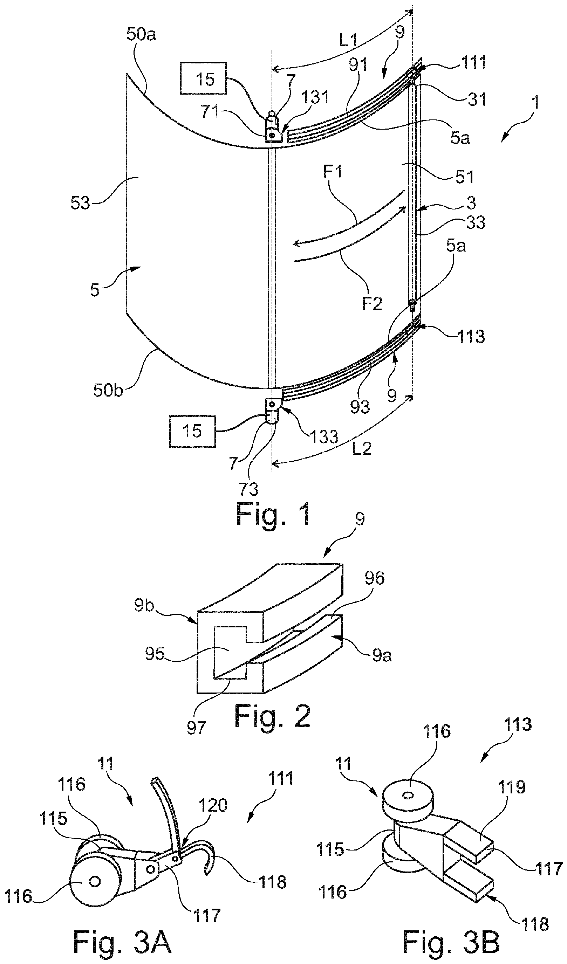

En référence à la figure 1, il est représenté un système d'essuyage 1, notamment pour véhicule automobile. Afin de ne pas surcharger la figure, seule une partie du système d'essuyage 1 est représentée. Le système d'essuyage 1 comprend au moins un balai 3 et au moins un moteur d'entraînement 7.

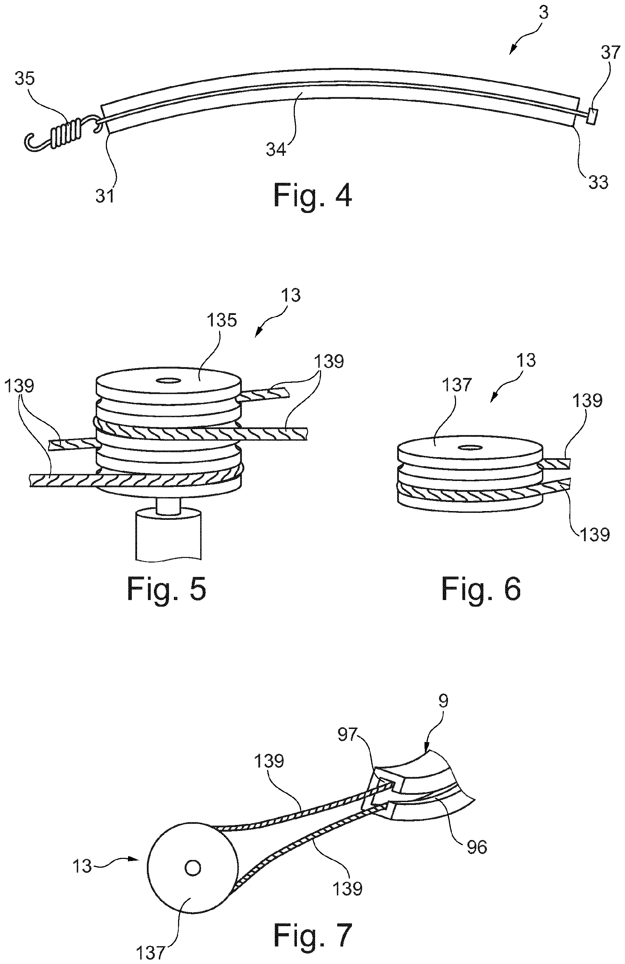

Le balai 3 (mieux visible sur la figure 4) est configuré pour se déplacer selon une translation linéaire sur une vitre 5 à essuyer du véhicule automobile comme illustré par les flèches F1 et F2. On entend par translation linéaire, un déplacement en translation du balai 3 sur la vitre 5 parallèlement à l'horizon. La vitre 5 peut être de forme générale rectangulaire ou trapézoïdale, comme par exemple un pare-brise avant. Par ailleurs, afin d'améliorer l'aérodynamisme des véhicule automobiles et donc de limiter les consommations énergétiques de ces véhicules, la vitre 5 présente une courbure dirigée vers l'extérieur de l'habitacle du véhicule automobile. L'au moins un balai 3 présente une première extrémité 31 disposée à une première extrémité 50a de la vitre 5, une deuxième extrémité 33 disposée à une deuxième extrémité 50b de la vitre 5 opposée à la première extrémité 50a et une lame d'essuyage 34 disposée au contact de la vitre 5 afin de permettre son essuyage. Ainsi, le système d'essuyage 1 correspond à un système d'essuyage linéaire. De manière générale, le système d'essuyage 1 comprend deux balais 3 disposés de part et d'autre de la vitre 5 formant le pare-brise par exemple. Cependant, le système d'essuyage 1 peut présenter un nombre différent de balais 3 selon la longueur de la vitre 5 à essuyer par exemple.

L'au moins un moteur d'entraînement 7 est configuré pour permettre le déplacement en translation du balai 3 sur la vitre 5 à essuyer selon une direction parallèle à deux côtés 5a opposés de cette vitre 5. A cet effet, l'au moins un moteur d'entraînement 7 est relié à au moins une unité de contrôle 15. Selon le mode de réalisation de la figure 1, le système d'essuyage présente un premier moteur d'entraînement 71 disposé au niveau de la première extrémité 50a de la vitre 5 et un deuxième moteur d'entraînement 73 disposé au niveau de la deuxième extrémité 50b de la vitre 5, les première 50a et deuxième 50b extrémités de la vitre 5 correspondant aux côtés 5a opposés. Les premier 71 et deuxième 73 moteurs d'entraînement pilotés par l'au moins une unité de contrôle 15 permettent de déplacer de manière synchrone les première 31 et deuxième 33 extrémités du balai 3, ce qui permet de déplacer la lame d'essuyage 34 sur l'ensemble de la vitre 5, et notamment les première 31 et deuxième 33 extrémités du balais afin de garantir le bon essuyage de cette vitre 5, notamment des zones d'extrémité de cette vitre 5. Selon le mode de réalisation de la figure 1, il est représenté deux unités de contrôle 15. Cependant, le système d'essuyage 1 peut être piloté par une seule unité de contrôle 15.

Le système d'essuyage 1 comprend en outre au moins deux rails 9 (mieux visible sur la figure 2) disposés au niveau des côtés 5a de la vitre 5 et s'entendant parallèlement au sens de déplacement de l'au moins un balai 3 sur cette vitre 5. Plus précisément, le système d'essuyage comprend un premier 91 et un deuxième 93 rails, le premier rail 91 étant disposé au niveau de la première extrémité 50a de la vitre 5 et le deuxième rail 93 étant disposé au niveau de la deuxième extrémité 50b de la vitre 5 comme représenté en référence à la figure 1. Avantageusement, les au moins premier 91 et deuxième 93 rails présentent respectivement une courbure destinée à épouser la forme de la vitre 5 à essuyer. Les au moins deux rails 9 sont destinés à loger chacun au moins une coulisse 11 (mieux visible sur les figures 3A et 3B) du balai 3. Plus particulièrement en référence à la figure 1, le premier rail 91 est destiné à loger une première coulisse 111 et le deuxième rail 93 est destiné à loger une deuxième coulisse 113. Cette première coulisse 111 et deuxième coulisse 113 sont décrites plus en détail ultérieurement. Par ailleurs, le premier moteur d'entraînement 71 est disposé au niveau du premier rail 91 et le deuxième moteur d'entraînement 73 est disposé au niveau du deuxième rail 93.

Les première 111 et deuxième 113 coulisses sont reliées respectivement à la première 31 et à la deuxième 33 extrémités du balai 3. Le système d'essuyage 1 comprend en outre un mécanisme de couplage associé 13 (mieux visible sur les figures 5 à 7) permettant le déplacement des coulisses 11. Plus particulièrement en référence à la figure 1, le système d'essuyage 1 comprend un premier mécanisme de couplage associé 131 relié au premier moteur d'entraînement 71 afin de déplacer la première coulisse 111 dans le premier rail 91 et un deuxième mécanisme de couplage associé 133 relié au deuxième moteur d'entraînement 73 afin de déplacer la deuxième coulisse 113 dans le deuxième rail 93.

La présence de la première coulisse 111 et de la deuxième coulisse 113 logées dans le premier rail 91 et le deuxième rail 93 et reliés respectivement aux première 31 et deuxième 33 extrémités du balai 3 permet de maintenir ces première 31 et deuxième 33 extrémités du balai 3 au contact de la vitre 5. Cela permet notamment de garantir un essuyage efficace de l'ensemble de la vitre 5 quelque soit sa courbure.

En référence à la figure 1, la première extrémité 50a de la vitre 5 présente une longueur L1 et la deuxième extrémité 50b de la vitre 5 présente une longueur L2. Ces longueurs L1, L2 peuvent être identiques ou différentes selon le véhicule automobile considéré.

Dans le cas où les longueurs L1, L2 de la vitre 5 sont identiques, les au moins premier 71 et deuxième 73 moteurs d'entraînement sont configurés pour déplacer respectivement les première 111 et deuxième 113 coulisses à la même vitesse. En effet, dans une telle configuration, la course des première 111 et deuxième 113 coulisses est identique. Ainsi, pour limiter les efforts de torsion du balai 3 lors de son déplacement en translation sur la vitre 5, ces première 111 et deuxième 113 coulisses sont mises en mouvement par les premier 71 et deuxième 73 moteurs d'entraînement à la même vitesse. Pour cela, l'unité de contrôle 15 commande le fonctionnement des moteurs de manière à ce que les première 111 et deuxième 113 coulisses se déplacent à la même vitesse dans les premier 91 et deuxième 93 rails.

Dans le cas où les longueurs L1, L2 de la vitre 5 sont différentes, les au moins premier 71 et deuxième 73 moteurs d'entraînement sont configurés pour déplacer les première 111 et deuxième 113 coulisses à des vitesses différentes afin de pallier les différences de longueur des deux côtés 5a opposés de la vitre 5 à essuyer. En effet, afin d'assurer le déplacement de la lame d'essuyage 34 sur l'ensemble de la vitre 5 et de limiter les efforts de torsion sur le balai 3 au cours de son déplacement, les première 31 et deuxième 33 extrémités du balai 3 doivent être déplacées à des vitesses différentes afin de pallier notamment ces différences de longueur. Pour cela l'unité de contrôle 15 commande le fonctionnement des moteurs d'entraînement 7 de manière à ce que les première 111 et deuxième 113 coulisses se déplacent à des vitesses différentes afin qu'elles restent toujours en vis-à-vis afin de limiter les efforts de torsion qui pourraient s'appliquer sur le balai 3 et également pour assurer le déplacement de la lame d'essuyage 34 sur l'ensemble de la vitre 5.

Selon le mode de réalisation particulier de la figure 1, les au moins premier 71 et deuxième 73 moteurs d'entraînement sont configurés pour déplacer le balai 3 à une vitesse d'au plus 2 m/s sur la surface de la vitre 5 à essuyer. Avantageusement, le déplacement du balai 3 à une telle vitesse sur la vitre 5 permet de limiter réchauffement et donc l'usure du matériau formant le balai 3, ce matériau pouvant être du caoutchouc par exemple.

En référence à la figure 2, il est représenté le rail 9 plus en détail. La description suivante s'applique aussi bien au premier rail 91 ou au deuxième rail 93 de la figure 1. Le rail 9 selon ce mode de réalisation particulier s'apparente à un profilé, par exemple en métal, servant de guide au mouvement de translation du balai 3. Le rail 9 présente une face avant 9a destinée à être disposée vers l'extérieur du véhicule automobile et une face arrière 9b, opposée à la face avant 9a, destinée à être en contact au moins partiellement avec la carrosserie du véhicule automobile afin de permettre l'installation et la fixation du rail 9 sur le véhicule automobile. Le rail 9 peut être fixé sur le véhicule automobile par tout moyen connu de l'homme de l'art, comme par exemple par vissage, par soudure ou encore par collage.

Le rail 9 présente une surface intérieure 95 destinée à accueillir l'au moins une coulisse 11, une ouverture centrale 96 disposée au niveau de la face avant 9a et s'étendant sur toute la longueur du rail 9 permettant le passage d'une partie de la coulisse 11 coopérant avec le balai 3, et des ouvertures extrémales 97 disposées à chaque extrémité du rail 9 afin de permettre le passage d'une partie du mécanisme de couplage associé 13 afin de permettre le déplacement de la coulisse 11 à l'intérieur du rail 9.

Afin de faciliter le déplacement de la coulisse 11 à l'intérieur du rail 9, la surface intérieure 95 est réalisée en un matériau présentant un coefficient de frottement inférieur à 0,25. Selon le mode de réalisation particulier de la figure 2, le matériau utilisé pour la surface intérieure 95 du rail 9 est choisi parmi du cuivre, de l'étain, du bronze, du polytétrafluoroétthylène, un polyamide, du graphite, du nylon, un acétal, ou un mélange de ces composés. L'utilisation d'un tel matériau pour la surface intérieure 95 du rail 9 permet de limiter l'usure de la coulisse 11 au cours de son déplacement à l'intérieur du rail 9.

Selon une variante non représentée ici, la surface intérieure 95 du rail 9 est configurée pour permettre un déplacement de la coulisse 11 sur coussin d'air.

Par ailleurs, afin de prévenir l'usure du mécanisme de couplage associé 13, les ouvertures extrémales 97 du rail 9 peuvent présenter une forme configurée pour limiter l'altération du mécanisme de couplage associé 13, comme par exemple une forme arrondie ou chanfreinée.

En référence à la figure 4, il est représenté le balai 3 selon un mode de réalisation particulier. Selon ce mode de réalisation particulier, la première extrémité 31 du balai 3 présente un ressort 35 destiné à assurer la liaison entre la première extrémité 31 du balai 3 et la première coulisse 111 disposée dans l'au moins un premier rail 91 et la deuxième extrémité 33 du balai 3 présente une forme spécifique d'attache 37, notamment sphérique ou parallélépipédique, destinée à coopérer avec la deuxième coulisse 113 disposé dans l'au moins un deuxième rail 93. La présence du ressort 35 au niveau de la première extrémité 31 du balai 3 permet de compenser les variations de la distance entre les premier 91 et deuxième 93 rails grâce à la compression ou à l'extension de ce ressort 35. En effet, cette distance peut varier selon l'emplacement où se trouve le balai 3 sur la vitre 5. De plus, l'utilisation du ressort 35 permet de plaquer la lame d'essuyage 34 sur la vitre 5 grâce à la tension exercée par le ressort 35 sur la lame d'essuyage 34.

Par ailleurs, selon le mode de réalisation particulier de la figure 4, le balai 3 présente uniquement la lame d'essuyage 34 de manière à ce que la lame d'essuyage 34 présente une flexibilité suffisante pour épouser la forme de la vitre 5 entre ses première 50a et deuxième 50b extrémités quelque soit la courbure de cette vitre 5.

Selon une variante non représentée ici, la deuxième extrémité 33 du balai 3 peut également présenter un ressort 35 destiné à assurer la liaison entre la deuxième extrémité 33 du balai 3 et la deuxième coulisse 113 disposée dans l'au moins un deuxième rail 93. Selon cette variante, les première 31 et deuxième 33 extrémités du balai 3 présentent donc un ressort 35.

De manière optionnelle selon une variante non représentée, le balai 3 peut présenter un témoin d'usure ou de vieillissement permettant d'avertir l'utilisateur du véhicule automobile quant à la nécessité de procéder au remplacement du balai 3.

En référence aux figures 3A et 3B, il est représenté les première 111 (figure 3A) et deuxième 113 (figure 3B) coulisses destinées à coopérer avec le balai 3 selon le mode de réalisation particulier de la figure 4. Les première 111 et deuxième 113 coulisses présentent une première extrémité 115 destinée à être logée dans le rail 9 et une deuxième extrémité 117 présentant une pince 118 destinée à permettre la coopération de ladite coulisse 11 avec la première 31 ou la deuxième 33 extrémité du balai 3.

Selon le mode de réalisation de la figure 3A, la pince 118 de la deuxième extrémité 117 de la première coulisse 111 présente un fermoir 120 destiné à coopérer avec une extrémité libre du ressort 35 de la première extrémité 31 du balai 3 afin d'assurer la coopération de la première coulisse 111 avec la première extrémité 31 du balai 3. Avantageusement, l'utilisation de ce fermoir 120 permet de libérer facilement la première extrémité 31 du balai 3 et de procéder rapidement au remplacement du balai 3 lorsque cela s'avère nécessaire.

Selon le mode de réalisation particulier de la figure 3B, la pince 118 de la deuxième coulisse 113 présente une forme complémentaire 119 à la forme spécifique d'attache 37 portée par la deuxième extrémité 33 du balai 3 afin de permettre la coopération de la deuxième extrémité 117 de la deuxième coulisse 113 avec la deuxième extrémité 33 du balai 3.

Par ailleurs, selon le mode de réalisation particulier des figures 3A et 3B, la première extrémité 115 de la coulisse 11 présente des roues 116 afin de permettre son déplacement à l'intérieur du rail 9. Selon une variante non représentée ici, lorsque la coulisse 11 est destinée à être déplacée à l'intérieur du rail 9 sur coussin d'air, la présence de ces roues 116 peut ne pas être nécessaire.

En référence aux figures 5 à 7, il est représenté le mécanisme de couplage associé 13 permettant le déplacement de la coulisse 11 à l'intérieur du rail 9. Les premier 131 et deuxième 133 mécanismes de couplage associés sont choisis parmi un système à courroie et poulie, un système à câble et poulie, ou encore un système à poulie et crémaillère. Selon le mode de réalisation particulier représenté ici, le mécanisme de couplage associé 13 correspond à un système à câble 139 et poulie 135, 137. Par ailleurs, en référence à la figure 7, l'ouverture extrémale 97 du rail 9 présente des bords arrondis de manière à limiter la fatigue du câble 139. Une telle forme pour les bords de l'ouverture extrémale 97 peut également être utilisée dans le cas d'un mécanisme de couplage associé 13 mettant en œuvre un système à courroie et poulie. Selon une variante non représentée, l'ouverture extrémale 97 peut présenter une forme d'entonnoir convergent vers l'intérieur du rail 9.

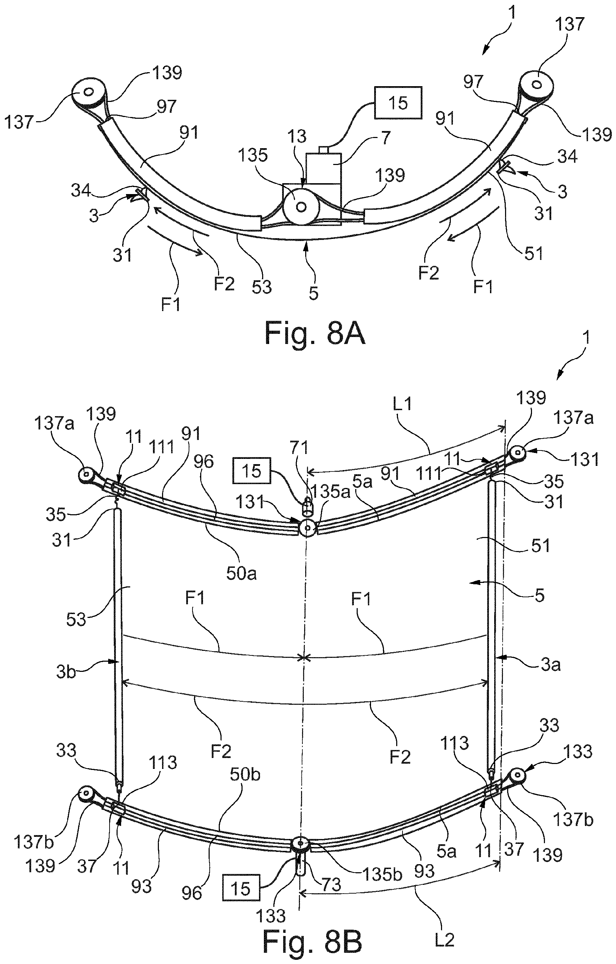

En référence aux figures 8A et 8B, il est représenté le système d'essuyage 1 selon un mode de réalisation particulier. Selon ce mode de réalisation particulier, le système d'essuyage 1 est installé sur une vitre 5, comme le pare-brise d'un camion par exemple, présentant une courbure prononcée (visible sur la figure 8A).

Selon le mode de réalisation particulier représenté ici, la vitre 5 comporte un premier côté 51 et un deuxième côté 53. Afin de garantir un bon essuyage de cette vitre 5, le système d'essuyage 1 présente un premier balai 3a disposé du premier côté 51 de la vitre 5 et un deuxième balai 3b disposé du deuxième côté 53 de la vitre 5. En effet, selon la taille, et notamment la longueur de la vitre 5, il peut être nécessaire d'avoir recours à deux balais 3, voire même plus, afin de garantir une évacuation efficace de l'eau pouvant se déposer sur la vitre 5 lors d'un épisode pluvieux par exemple.

Les premier 3a et deuxième 3b balais sont destinés à être déplacés respectivement sur le premier 51 et le deuxième 53 côtés de la vitre 5 selon les flèches F1 et F2, c'est-à-dire selon une translation linéaire. Selon ce mode de réalisation particulier, lorsque les premier 3a et deuxième 3b balais se déplacent selon la flèche F1, ils se déplacent de manière à se rapprocher l'un de l'autre. Par ailleurs, lorsqu'ils se déplacent selon la flèche F2, ils se déplacent de manière à s'éloigner l'un de l'autre.

Le système d'essuyage 1 comporte le premier 71 et le deuxième 73 moteurs d'entraînement disposés respectivement au centre des premier 91 et deuxième 93 rails. Les premier 71 et deuxième 73 moteurs d'entraînement sont pilotés par une ou plusieurs unités de contrôle 15. Plus particulièrement selon ce mode de réalisation particulier, les premier 71 et deuxième 73 moteurs d'entraînement sont pilotés respectivement par une unité de contrôle 15. Par ailleurs, le premier côté 51 et le deuxième côté 53 de la vitre 5 sont opposés l'un par rapport à l'autre par rapport aux premier 71 et deuxième 73 moteurs d'entraînement.

Le système d'essuyage comprend également le premier 131 et le deuxième 133 mécanismes de couplage associés. Les premier 131 et deuxième 133 mécanismes de couplage associés comprennent une première 135a et une deuxième 135b poulies à quatre canaux, deux premières 137a et deux deuxième 137b poulies à deux canaux, et quatre câbles 139 reliant respectivement les premières poulies à deux canaux 137a à la première poulie à quatre canaux 135a et les deuxièmes poulies à deux canaux 137b à la deuxième poulie à quatre canaux 135b.

La première 135a et la deuxième 135b poulies à quatre canaux sont disposées au centre des premier 91 et deuxième 93 rails et sont mues en rotation respectivement par les premier 71 et deuxième 73 moteurs d'entraînement. Selon ce mode de réalisation particulier, le premier rail 91 et le deuxième rail 93 peuvent présenter une ouverture pour permettre le passage des première 135a et deuxième 135b poulies à quatre canaux. Selon un autre mode de réalisation non représenté ici, les première 135a et deuxième 135b poulies à quatre canaux peuvent être disposées à l'intérieur des premier 91 et deuxième 93 rails.

D'autre part, les deux premières 137a et les deux deuxièmes 137b poulies à deux canaux sont disposées respectivement aux extrémités des premier 91 et deuxième 93 rails. Selon le mode de réalisation particulier représenté ici, les premières 137a et deuxièmes 137b poulies à deux canaux sont disposées à l'extérieur des premier 91 et deuxième 93 rails. Selon un autre mode de réalisation non représenté ici, ces premières 137a et deuxièmes 137b poulies à deux canaux peuvent être disposées à l'intérieur des premier 91 et deuxième 93 rails.

Par ailleurs, les câbles 139 supportent chacun au moins une coulisse 11 et sont configurés pour permettre le déplacement de cette au moins une coulisse 11 entre une des poulies à deux canaux 137a, 137b et une des poulies à quatre canaux 135 reliées par le câble 139 de manière à permettre le déplacement du premier 3a ou du deuxième 3b balai sur la vitre 5 à essuyer.

Selon le mode de réalisation particulier décrit ici, les câbles 139 sont tendus entre les poulies à quatre canaux 135 et les poulies à deux canaux 137 de manière à ce qu'il n'y ait pas de décalage entre le début de la rotation de la poulie à quatre canaux 135 et le début de la rotation de la poulie à deux canaux 137. En effet, selon ce mode de réalisation, les poulies à deux canaux 137 sont mues en rotation grâce à la rotation des poulies à quatre canaux 135 dont le mouvement est transféré par le câble 139 de manière à permettre le déplacement de la coulisse 11 entre les poulies à quatre canaux 135 et les poulies à deux canaux 137 selon les flèches F1 ou F2.

Avantageusement, la rotation des poulies à quatre canaux 135 disposées au centre des premier 91 et deuxième 93 rails est contrôlée par l'unité de contrôle 15 permettant ainsi de coordonner le déplacement des premier 3a et deuxième 3b balais de manière à ce que ce déplacement des premier 3a et deuxième 3b balais soit synchrone selon les flèches F1 ou F2.

Selon un autre mode de réalisation non représenté ici, les premier 71 et deuxième 73 moteurs d'entraînement peuvent être disposés au niveau d'une extrémité respectivement des premier 91 et deuxième 93 rails. Dans cet autre mode de réalisation, une des premières poulies à deux canaux 137a et une des deuxièmes poulies à deux canaux 137b sont mues en rotation par les premier 71 et deuxième 73 moteurs d'entraînement afin de permettre le déplacement des coulisses 11 à l'intérieur des premier 91 et deuxième 93 rails, permettant ainsi le déplacement des premier 3a et deuxième 3b balais sur la vitre à essuyer. Selon cet autre mode de réalisation, les premier 71 et deuxième 73 moteurs d'entraînement peuvent être contrôlés par une seule unité de contrôle 15 ou chaque moteur d'entraînement 7 peut être contrôlé par une unité de contrôle 15 propre.

Selon une autre variante non représentée, le système d'essuyage 1 peut présenter quatre moteurs d'entraînement 7 disposés de manière à entraîner en rotation chacun une poulie à deux canaux 137. Ainsi, les quatre moteurs d'entraînement 7 sont disposés chacun à une extrémité des premier 91 et deuxième 93 rails. Par ailleurs, selon cette variante, les moteurs d'entraînement 7 peuvent être contrôlés par une seule unité de contrôlé 15. De manière alternative, le système d'essuyage peut comprendre deux unités de contrôle 15 configurées pour piloter respectivement deux moteurs d'entraînement 7. Selon une autre alternative, le système d'essuyage 1 peut comprendre quatre unités de contrôle 15, chaque unité de contrôle 15 pilotant un moteur d'entraînement 7.

Les différents modes de réalisations décrits ci-dessus sont des exemples donnés à titre illustratif et non limitatif. En effet, il est tout à fait possible pour l'homme de l'art d'utiliser un autre matériau que du caoutchouc pour former le balai 3 sans sortir du cadre de la présente invention. De plus, selon le matériau utilisé pour former le balai 3, la vitesse de déplacement de ce balai 3 sur la vitre 5 pourra être modifiée sans sortir du cadre de la présente invention. Par ailleurs, l'homme de l'art pourra utiliser tout autre type de fixation du rail 9 sur le véhicule automobile que ceux décrits précédemment sans sortir du cadre de la présente invention. Ensuite, l'homme de l'art pourra utiliser tout autre matériau présentant un coefficient de frottement inférieur à 0,25 que ceux décrits précédemment pour constituer la surface intérieure 95 du rail sans sortir du cadre de la présente invention. D'autre part, l'homme de l'art pourra modifier la structure de la forme spécifique 37 portée par la deuxième extrémité 33 du balai 3 sans sortir du cadre de la présente invention. Enfin, l'homme de l'art pourra également utiliser d'autres types de mécanismes de couplage associés 13 que ceux décrits précédemment sans sortir du cadre de la présente invention.

Ainsi, l'obtention d'un système d'essuyage 1 linéaire permettant un bon essuyage de la vitre 5 est possible grâce au système d'essuyage 1 décrit précédemment. Par ailleurs, la courbure de la vitre 5 n'influence pas sur la qualité de l'essuyage car les premier 91 et deuxième 93 rails épousent la forme de la vitre 5 et donc les différents angles d'attaque de cette vitre 5. D'autre part, les premier 71 et deuxième 73 moteurs d'entraînement permettent de compenser les variations éventuelles de longueur des côtés 5a de la vitre 5 en modifiant la vitesse de course de la première 111 ou de la deuxième 113 coulisse.

## Revendications

1. Système d'essuyage (1), notamment pour véhicule automobile, comprenant au moins un balai (3) configuré pour se déplacer selon une translation linéaire sur une vitre (5) et selon une direction parallèle à deux côtés (5a) opposés de cette vitre (5), ledit au moins un balai (3) présentant une première extrémité (31) et une deuxième extrémité (33), le système d'essuyage (1) comprenant en outre au moins un premier rail (91) et un deuxième rail (93) disposés au niveau des côtés (5a) de la vitre (5), lesdits au moins premier rail (91) et deuxième rail (93) présentant respectivement une courbure destinée à épouser la forme de la vitre (5), le système étant **caractérisé en ce que** le premier rail (91) et le deuxième rail (93) sont destinés à loger une première coulisse (111) et une deuxième coulisse (113) reliées respectivement à la première (31) et à la deuxième (33) extrémités du balai (3), et **en ce que** le système d'essuyage (1) comprend en outre au moins un premier moteur (71) et un deuxième moteur (73) d'entraînement disposés respectivement au niveau du premier rail (91) et du deuxième rail (93) pour entraîner respectivement via un premier mécanisme (131) et un deuxième mécanisme (133) de couplage associé la première coulisse (111) et la deuxième coulisse (113), lesdits au moins premier moteur (71) et deuxième moteur (73) d'entraînement étant pilotés par une unité de contrôle (15) configurée pour permettre le déplacement synchronisé de la première coulisse (111) et de la deuxième coulisse (113).

2. Système d'essuyage (1) selon la revendication précédente, **caractérisé en ce que** la première extrémité (31) du balai (3) présente un ressort (35) destiné à assurer la liaison entre la première extrémité (31) du balai (3) et la première coulisse (111) disposée dans l'au moins un premier rail (91).

3. Système d'essuyage (1) selon l'une quelconque des revendications précédentes, **caractérisé en ce que** la deuxième extrémité (33) du balai (3) présente une forme spécifique d'attache (37), notamment sphérique ou parallélépipédique, destinée à coopérer avec la deuxième coulisse (113) disposée dans l'au moins un deuxième rail (93).

4. Système d'essuyage (1) selon l'une quelconque des revendications précédentes, **caractérisé en ce que** la première coulisse (111) et la deuxième coulisse (113) présentent une première extrémité (115) logée dans le rail (9) et une deuxième extrémité (117) présentant une pince (118) destinée à permettre la coopération de ladite coulisse avec la première (31) ou la deuxième (33) extrémité du balai (3).

5. Système d'essuyage (1) selon l'une quelconque des revendications précédentes, **caractérisé en ce que** le premier moteur (71) et le deuxième moteur (73) d'entraînement sont configurés pour déplacer respectivement la première coulisse (111) et la deuxième coulisse (113) à la même vitesse.

6. Système d'essuyage (1) selon l'une quelconque des revendications 1 à 4, **caractérisé en ce que** le premier moteur (71) et le deuxième moteur (73) d'entraînement sont configurés pour déplacer respectivement la première coulisse (111) et la deuxième coulisse (113) à des vitesses différentes afin de pallier les différences de longueur des deux côtés (5a) opposés de la vitre (5).

7. Système d'essuyage (1) selon l'une quelconque des revendications précédentes, **caractérisé en ce que** le premier mécanisme (131) et le deuxième mécanisme (133) de couplage associé sont choisis parmi un système à courroie et poulie, un système à câble et poulie, ou encore un système à poulie et crémaillère.

8. Système d'essuyage (1) selon la revendication 9, **caractérisé en ce que** le premier rail (91) et le deuxième rail (93) présentent chacun au moins une ouverture extrémale (97), lesdites ouvertures extrémales (97) présentant une forme configurée pour limiter l'altération du premier mécanisme (131) et du deuxième mécanisme (133) de couplage associés, notamment une forme arrondie ou chanfreinée.

9. Système d'essuyage (1) d'une vitre (5) selon l'une quelconques des revendications précédentes, **caractérisé en ce qu'**il comporte :
• le premier moteur (71) et le deuxième moteur (73) d'entraînement disposés respectivement au centre du premier rail (91) et du deuxième rail (93),
• un premier balai (3a) et un deuxième balai (3b), le premier balai (3a) étant disposé d'un premier côté (51) de la vitre (5) et le deuxième balai (3b) étant disposé d'un deuxième côté (53) de la vitre (5), opposé au premier côté (51) par rapport au premier moteur (71) et deuxième moteur (73) d'entraînement,
• le premier mécanisme (131) et le deuxième mécanisme (133) de couplage associé comprenant :
- une première poulie (135a) et une deuxième poulie (135b) à quatre canaux, disposée au centre du premier rail (91) et deuxième rail (93) et mues en rotation respectivement par le premier moteur (71) et le deuxième moteur (73) d'entraînement,
- deux premières poulies (137a) et deux deuxièmes poulies (137b) à deux canaux, disposées respectivement aux extrémités du premier rail (91) et deuxième rail (93), et
- quatre câbles (139) reliant respectivement les premières poulies à deux canaux (137a) à la première poulie à quatre canaux (135a) et les deuxièmes poulies à deux canaux (137b) à la deuxième poulie à quatre canaux (135b), lesdits câbles (139) supportant chacun au moins une coulisse (11) et étant configurés pour permettre le déplacement de cette au moins une coulisse (11) entre la poulie à deux canaux (137) et la poulie à quatre canaux (135) reliées par ledit câble (139) de manière à permettre le déplacement du premier (3a) ou du deuxième (3b) balai sur la vitre (5) à essuyer.

## Patentansprüche

1. Wischsystem (1), insbesondere für ein Kraftfahrzeug, aufweisend mindestens einen Wischer (3), welcher dafür ausgelegt ist, um sich gemäß einer linearen Verschiebung auf einer Glasscheibe (5) und gemäß einer Richtung parallel zu zwei sich gegenüber liegenden Seitenstücken (5a) der Scheibe (5) zu bewegen, wobei der mindestens eine Wischer (3) ein erstes Ende (31) und ein zweites Ende (33) aufweist, wobei das Wischsystem (1) außerdem mindestens eine erste Schiene (91) und eine zweite Schiene (93) aufweist, welche auf der Höhe der Seitenstücke (5a) der Scheibe (5) angeordnet sind, wobei die mindestens erste Schiene (91) und zweite Schiene (93) jeweils eine Krümmung aufweisen, welche dafür vorgesehen ist, sich der Form der Scheibe (5) anzuschmiegen,
wobei das System **dadurch gekennzeichnet ist, dass** die erste Schiene (91) und die zweite Schiene (93) dazu vorgesehen sind, einen ersten Schlitten (111) und einen zweiten Schlitten (113) unterzubringen, welche jeweils mit dem ersten (31) und zweiten (33) Ende des Wischers (3) verbunden sind, und dass das Wischsystem (1) außerdem mindestens einen ersten Antriebsmotor (71) und einen zweiten Antriebsmotor (73) aufweist, welche jeweils auf der Höhe der ersten Schiene (91) und der zweiten Schiene (93) angeordnet sind, um über einen ersten Koppelmechanismus (131) und einen zweiten zugeordneten Koppelmechanismus (133) den ersten Schlitten (111) und den zweiten Schlitten (113) jeweils anzutreiben, wobei der mindestens erste Antriebsmotor (71) und zweite Antriebsmotor (73) durch eine Steuereinheit (15) angesteuert werden, welche dafür ausgelegt ist, um eine synchronisierte Bewegung des ersten Schlittens (111) und des zweiten Schlittens (113) zu ermöglichen.

2. Wischsystem (1) nach dem vorhergehenden Anspruch, **dadurch gekennzeichnet, dass** das erste Ende (31) des Wischers (3) eine Feder (35) aufweist, welche dafür vorgesehen ist, die Verbindung zwischen dem ersten Ende (31) des Wischers (3) und dem ersten Schlitten (111), welcher in der mindestens ersten Schiene (91) angeordnet ist, zu gewährleisten.

3. Wischsystem (1) nach einem der vorhergehenden Ansprüche, **dadurch gekennzeichnet, dass** das zweite Ende (33) des Wischers (3) eine spezifische Befestigungsform (37), welche insbesondere kugelförmig oder quaderförmig ist, aufweist, welche dafür vorgesehen ist, mit dem zweiten Schlitten (113), welcher in der mindestens zweiten Schiene (93) angeordnet ist, zusammenzuwirken.

4. Wischsystem (1) nach einem der vorhergehenden Ansprüche, **dadurch gekennzeichnet, dass** der erste Schlitten (111) und der zweite Schlitten (113) ein in der Schiene (9) untergebrachtes erstes Ende (115) und ein zweites Ende (117) aufweisen, welches eine Klemme (118) aufweist, welche dafür vorgesehen ist, um ein Zusammenwirken des Schlittens mit dem ersten (31) oder dem zweiten (33) Ende des Wischers (3) zu ermöglichen.

5. Wischsystem (1) nach einem der vorhergehenden Ansprüche, **dadurch gekennzeichnet, dass** der erste Antriebsmotor (71) und der zweite Antriebsmotor (73) dafür ausgelegt sind, um den ersten Schlitten (111) und den zweiten Schlitten (113) jeweils mit der gleichen Geschwindigkeit zu bewegen.

6. Wischsystem (1) nach einem der Ansprüche 1 bis 4, **dadurch gekennzeichnet, dass** der erste Antriebsmotor (71) und der zweite Antriebsmotor (73) dafür ausgelegt sind, um den ersten Schlitten (111) und den zweiten Schlitten (113) jeweils mit unterschiedlichen Geschwindigkeiten zu bewegen, um die Längenunterschiede der beiden gegenüber liegenden Seitenstücke (5a) der Scheibe (5) auszugleichen.

7. Wischsystem (1) nach einem der vorhergehenden Ansprüche, **dadurch gekennzeichnet, dass** der erste Koppelmechanismus (131) und der zweite zugeordnete Koppelmechanismus (133) aus einem System aus Riemen und Riemenscheibe, einem System aus Kabel und Rolle oder aber einem System aus Rolle und Zahnstange ausgewählt wird.

8. Wischsystem (1) nach Anspruch 9, **dadurch gekennzeichnet, dass** die erste Schiene (91) und die zweite Schiene (93) jeweils mindestens eine Endöffnung (97) aufweisen, wobei die Endöffnungen (97) eine Form aufweisen, welche dafür ausgelegt ist, um eine Veränderung des ersten zugeordneten Koppelmechanismus (131) und des zweiten zugeordneten Koppelmechanismus (133) zu begrenzen, insbesondere eine abgerundete oder angefaste Form.

9. Wischsystem (1) einer Scheibe (5) nach einem der vorhergehenden Ansprüche, **dadurch gekennzeichnet, dass** es umfasst:
• den ersten Antriebsmotor (71) und den zweiten Antriebsmotor (73), welche jeweils in der Mitte der ersten Schiene und der zweiten Schiene (93) angeordnet sind,
• einen ersten Wischer (3a) und einen zweiten Wischer (3b), wobei der erste Wischer (3a) auf einer ersten Seite (51) der Scheibe (5) angeordnet ist und der zweite Wischer (3b) auf einer zweiten Seite (53) der Scheibe (5) angeordnet ist, welche in Bezug auf den ersten Antriebsmotor (71) und den zweiten Antriebsmotor (73) der ersten Seite (51) gegenüber liegt,
• wobei der erste Koppelmechanismus (131) und der zweite zugeordnete Koppelmechanismus (133) aufweisen:
- eine erste Rolle (135a) und eine zweite Rolle (135b) mit vier Rillen, welche in der Mitte der ersten Schiene (91) und der zweiten Schiene (93) angeordnet sind und jeweils durch den ersten Antriebsmotor (71) und den zweiten Antriebsmotor (73) in Drehung versetzt werden,
- zwei erste Rollen (137a) und zwei zweite Rollen (137b) mit zwei Rillen, welche jeweils an den Enden der ersten Schiene (91) und der zweiten Schiene (93) angeordnet sind, und
- vier Kabel (139), welche jeweils die ersten Rollen mit zwei Rillen (137a) mit der ersten Rolle mit vier Rillen (135a) und die zweiten Rollen mit zwei Rillen (137b) mit der zweiten Rolle mit vier Rillen (135b) verbinden, wobei die Kabel (139) jeweils mindestens einen Schlitten (11) halten und dafür ausgelegt sind, um die Bewegung dieses mindestens einen Schlittens (11) zwischen der Rolle mit zwei Rillen (137) und der Rolle mit vier Rillen (135) zu ermöglichen, welche durch das Kabel (139) derartig verbunden sind, um die Bewegung des ersten (3a) und des zweiten (3b) Wischers auf der zu wischenden Scheibe (5) zu ermöglichen.

## Claims

1. Wiping system (1), notably for a motor vehicle, comprising at least one blade (3) configured to move in linear translation over a window (5) and in a direction parallel to two opposite sides (5a) of this window (5), the said at least one blade (3) having a first end (31) and a second end (33), the wiping system (1) further comprising at least a first rail (91) and a second rail (93) which are arranged at the sides (5a) of the window (5), the said at least first rail (91) and second rail (93) respectively having a curvature intended to espouse the shape of the window (5), the system being **characterized in that** the first rail (91) and the second rail (93) are intended to house a first runner (111) and a second runner (113) which are respectively connected to the first (31) and to the second (33) ends of the blade (3), and **in that** the wiping system (1) further comprises at least one first drive motor (71) and one second drive motor (73) arranged respectively at the first rail (91) and at the second rail (93) in order respectively to drive the first runner (111) and the second runner (113) via a first associated coupling mechanism (131) and second associated coupling mechanism (133), the said at least first drive motor (71) and second drive motor (73) being operated by a control unit (15) configured to allow the movements of the first runner (111) and of the second runner (113) to be synchronized.

2. Wiping system (1) according to the preceding claim, **characterized in that** the first end (31) of the blade (3) has a spring (35) intended to provide the connection between the first end (31) of the blade (3) and the first runner (111) arranged in the at least one first rail (91).

3. Wiping system (1) according to either one of the preceding claims, **characterized in that** the second end (33) of the blade (3) has a specific shape of attachment (37), notably spherical or parallelepipedal, intended to collaborate with the second runner (113) arranged in the at least one second rail (93).

4. Wiping system (1) according to any one of the preceding claims, **characterized in that** the first runner (111) and the second runner (113) have a first end (115) housed in the rail (9) and a second end (117) exhibiting a clip (118) intended to allow the said runner to collaborate with the first (31) or the second (33) end of the blade (3).

5. Wiping system (1) according to any one of the preceding claims, **characterized in that** the first drive motor (71) and the second drive motor (73) are configured to move the first runner (111) and the second runner (113) respectively at the same speed.

6. Wiping system (1) according to any one of claims 1 to 4, **characterized in that** the first drive motor (71) and the second drive motor (73) are configured to move the first runner (111) and the second runner (113) at different speeds so as to mitigate the effects of differences in length of the two opposite sides (5a) of the window (5).

7. Wiping system (1) according to any one of the preceding claims, **characterized in that** the first associated coupling mechanism (131) and the second associated coupling mechanism (133) are chosen from a belt-and-pulley system, a cable-and-pulley system, or alternatively a rack-and-pulley system.

8. Wiping system (1) according to claim 9, **characterized in that** the first rail (91) and the second rail (93) each have at least one end opening (97), the said end openings (97) having a shape configured to limit the impairment of the first associated coupling mechanism (131) and second associated coupling mechanism (133), notably a rounded or chamfered shape.

9. Wiping system (1) for wiping a window (5) according to any one of the preceding claims, **characterized in that** it comprises:
• the first drive motor (71) and the second drive motor (73) which are arranged respectively at the centre of the first rail (91) and of the second rail (93),
• a first blade (3a) and a second blade (3b), the first blade (3a) being positioned on a first side (51) of the window (5) and the second blade (3b) being positioned on a second side (53) of the window (5), opposite to the first side (51) with respect to the first drive motor (71) and second drive motor (73),
• the first associated coupling mechanism (131) and the second associated coupling mechanism (133), comprising:
- a first four-groove pulley (135a) and a second four-groove pulley (135b), positioned at the centre of the first rail (91) and second rail (93) and moved in terms of rotation by the first drive motor (71) and second drive motor (73) respectively,
- two first two-groove pulleys (137a) and two second two-groove pulleys (137b) positioned respectively at the ends of the first rail (91) and second rail (93), and
- four cables (139) respectively connecting the first two-groove pulleys (137a) to the first four-groove pulley (135a) and the second two-groove pulleys (137b) to the second four-groove pulley (135b), the said cables (139) each supporting at least one runner (11) and being configured to allow this at least one runner (11) to be moved between the two-groove pulley (137) and the four-groove pulley (135) which are connected via the said cable (139) so as to allow the first (3a) or the second (3b) blade to be moved over the window (5) that is to be wiped.
